(19) Europäisches Patentamt / European Patent Office / Office européen des brevets

(11) **EP 2 141 515 B1**

(12) **FASCICULE DE BREVET EUROPEEN**

(45) Date de publication et mention
de la délivrance du brevet:
**25.05.2011 Bulletin 2011/21**

(51) Int Cl.:
***G01V 1/36*** (2006.01)

(21) Numéro de dépôt: **09290503.3**

(22) Date de dépôt: **26.06.2009**

(54) **Méthode d'inversion conjointe de données sismiques représentées sur des échelles de temps différentes**

Methode zur gemeinsamen Inversion von seismischen Daten, die auf unterschiedlichen Zeitskalen abgebildet sind

Method for the joint inversion of seismic data represented on different time scales

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **03.07.2008 FR 0803769**

(43) Date de publication de la demande:
**06.01.2010 Bulletin 2010/01**

(73) Titulaire: **IFP Energies nouvelles
92852 Rueil-Malmaison Cedex (FR)**

(72) Inventeurs:
• **Tonellot, Thierry
92500 Rueil-Malmaison (FR)**
• **Bernard, Marie-Lise
94200 Ivry-sur-Seine (FR)**
• **Clochard, Vincent
78500 Sartrouville (FR)**

(56) Documents cités:
**EP-A- 1 624 321**

• **SAMPEI M ET AL: "Anti-windup Control for MIMO System Using Timescale Transform" CONTROL APPLICATIONS, 2006 IEEE INTERNATIONAL CONFERENCE ON, IEEE, PI, 1 octobre 2006 (2006-10-01), pages 2613-2618, XP031011600 ISBN: 978-0-7803-9795-8**

**Description**

L'invention concerne le domaine de la géophysique et notamment le domaine de l'exploration pétrolière par des méthodes sismiques.

En particulier l'invention concerne une méthode d'inversion stratigraphique de données sismiques, pour obtenir des images représentatives d'un milieu hétérogène tel que le sous-sol, permettant ainsi une caractérisation des gisements d'hydrocarbures par exemple.

Les méthodes d'exploration sismique consistent à provoquer des ébranlements dans le sous-sol (émission d'ondes sismiques dans le sous-sol par une source sismique), et à observer en surface les ondes réfléchies sur les interfaces séparant les diverses couches géologiques de la Terre, dites formations (telles que les couches de grès, de sables, des schistes argileux,...), ou réfractées le long de certaines de ces interfaces. Chaque fois que les ondes sismiques rencontrent une interface géologique, une partie de ces ondes est réfléchie et remonte vers la surface où elle peut être détectée et enregistrée à l'aide de capteurs d'ondes sismiques. Des dispositifs particuliers permettent de faire des enregistrements multi-déports de ces ondes : c'est le principe de la sismique réflexion. On considère généralement les réflexions liées à l'émission de deux type d'ondes : les ondes de compression dites ondes P et les ondes de cisaillement dites ondes S.

Les interfaces géologiques repérées en sismique réflexion sont les surfaces de séparation des milieux d'impédances élastiques différentes. L'impédance élastique généralise la notion d'impédance acoustique, l'impédance acoustique étant par définition le produit de la densité (ou masse volumique) d'une roche par la vitesse de propagation de l'onde des ondes P dans celle-ci.

Par nature la sismique fournit la position des réflecteurs en temps double de trajet pour les atteindre et revenir. Pour connaître leur position réelle en profondeur (en mètres, par exemple), il faut connaître la vitesse de propagation des ondes pour estimer des lois de conversion temps-profondeur. La restitution en profondeur permettrait une comparaison directe des traces sismiques. Mais la définition d'un champ de vitesse fiable avec les techniques existantes reste une opération très délicate (surtout dans les milieux hétérogènes) et l'interprétation des sections sismiques se fait encore le plus souvent dans le domaine temps.

Les principales caractéristiques des ondes réfléchies sont liées d'une part aux contrastes d'impédance élastique entre les couches géologiques et d'autre part aux vitesses de propagation des ondes dans le milieu. Or, tous ces paramètres dépendent de la nature et du remplissage en fluides du sous-sol. La mise en production d'un gisement d'hydrocarbures va donc affecter la propagation des ondes sismiques dans la roche. Sur les enregistrements sismiques, cela se traduit par :

- des variations dans les amplitudes des ondes sismiques enregistrées ayant traversées le réservoir. Ces variations sont liées aux changements des impédances élastiques dans le réservoir ;

- des décalages temporels ("time shift") dans les enregistrements de certains évènements sismiques associés à un même réflecteur sismique en profondeur (on parle aussi de dé-alignement des évènements). Ces décalages peuvent être plus ou moins importants et sont liés à des changements (ou à des différences) dans le champ de vitesse de propagation des ondes élastiques considérées.

L'enregistrement des ondes réfléchies permet donc de connaître indirectement la nature des couches géologiques traversées et de suivre éventuellement l'évolution de leurs propriétés.

Une méthode connue d'analyse de données sismiques est l'inversion stratigraphique. L'inversion stratigraphique est, d'une manière générale, une technique permettant d'estimer un modèle décrit par un ou plusieurs paramètres à partir de données indirectes. En règle générale, cette technique est utilisée lorsque l'on ne peut pas mesurer directement les paramètres. Cette technique suppose que l'on sait résoudre le problème qui consiste à prédire les données lorsque l'on connaît les paramètres du modèle (étape de modélisation qui permet d'obtenir des données dites données synthétiques). C'est le cas, par exemple, dans le cadre de l'exploration pétrolière où l'on recherche des informations géologiques et pétrophysiques, caractérisant un réservoir tridimensionnel, mais où l'on ne peut généralement mesurer, sur une grande échelle que des informations sismiques. Dans ce cadre, l'inversion a pour but de déterminer des paramètres, tels que les impédances relatives aux ondes P et aux ondes S et/ou la densité, à partir de données sismiques issues d'ondes émises dans le milieu par une source sismique. Ces ondes se propagent dans le sous-sol et se réfléchissent sur les discontinuités du milieu. Elles sont enregistrées par des capteurs couplés avec la formation souterraine et collectées par un dispositif d'acquisition.

Des méthodes d'exploration sismique avancées nécessitent l'analyse de plusieurs jeux de données sismiques exprimées sur des bases de temps différentes. Il s'agit par exemple :

- des données issues de <u>sismique répétée</u> dans le temps, dite "de sismique 4D", effectuées dans le cadre d'études sur l'évolution de la distribution des fluides présents dans le sous-sol, sous forme d'un ou plusieurs réservoirs. Ces réservoirs peuvent contenir des hydrocarbures, des fluides d'origine naturelle (gaz naturel, eaux souterraines,...), des fluides injectés volontairement dans le sol (pour le stockage du CO2 ou de gaz naturel, ou encore pour améliorer les taux de récupération dans les puits producteurs, etc.). La sismique 4D est de plus en plus utilisée sur les gisements pétroliers après leur mise en production. Dans cette technologie, la mesure sismique (3D ou 2D) est soit répétée au même endroit à des époques différentes, soit mesurée en continu dans le temps à l'aide de dispositifs de capteurs permanents disposés en surface ou dans des puits. La comparaison des enregistrements permet ensuite de suivre l'évolution au cours du temps de ces gisements, en général d'hydrocarbures, en cartographiant les mouvements des fluides liés à la production pour optimiser les schémas d'exploitation des champs existants et des nouveaux champs. L'utilisation de mesures sismiques répétées dans le temps peut également contribuer à l'amélioration des modèles statiques de sous-sol notamment dans les zones réservoir non affectées par la production grâce à la redondance des mesures.

- des données <u>sismiques multi-composantes</u> acquises dans le cadre d'une campagne sismique d'exploration (2D ou 3D). L'interprétation conjointe de différents types de données sismiques mesurées permet d'améliorer la caractérisation des réservoirs ou plus généralement du sous-sol. La sismique multi-composantes fait intervenir la mesure de plusieurs types d'ondes réfléchies en même temps. On peut en effet mesurer, en plus des ondes PP correspondant à des réflexions successives d'une onde incidente P en onde P, les ondes PS correspondant aux ondes incidentes P réfléchies en ondes S. Plus généralement dans le cas d'une source sismique pouvant générer des ondes de cisaillement, S, on peut également enregistrer des ondes SS, correspondant à des réflexions successives d'une onde incidente S en onde S, et des ondes SP correspondant aux ondes incidentes S réfléchies en ondes P. Dans le cas de forte anisotropie due à la présence de failles dans le réservoir ou au-dessus de celui-ci (appelé "encaissant" ou "overburden"), on peut observer une décomposition ("splitting") des ondes S en : une onde S rapide (le long des lignes de faille) et une onde S lente (orthogonale aux lignes de failles). On parle alors d'ondes SV et SH. L'utilisation des ondes S peut donc être un bon moyen d'évaluer l'anisotropie relative du milieu. De plus, la combinaison des ondes P et S permet de mieux détecter les anomalies liées aux fluides, car les ondes S sont insensibles à la présence de fluides.

Un problème important dans l'analyse de plusieurs jeux de données, intervient lorsque ces jeux de données sont exprimés dans des échelles de temps différentes. Il s'agit du cas des données issues de sismiques répétée ou de sismique multi-composantes. Par exemple, dans le cadre de sismique multi-composantes (ou utilisant des ondes converties), le problème est de pouvoir prendre en compte les différences de temps de propagation entre les différents type d'ondes arrivant aux récepteurs, de nombreuses combinaisons étant possibles (ondes PP, PS, SP, SS,...).

Ainsi à cause des décalages en temps (d'origine 4D ou liés à des différences dans le type d'onde considéré dans le cadre de la sismique multi-composantes) qui peuvent compliquer leur interprétation, il est important de disposer d'outils spécifiques permettant d'analyser des jeux de données sismiques exprimées dans des échelles de temps différents.

### État de la technique

Dans le domaine de la sismique 4D, une technique classique d'analyse des enregistrements sismiques 4D consiste à mesurer directement les différences d'amplitude entre les traces sismiques des différents jeux de données disponibles. L'interprétation est alors souvent étayée par une modélisation du comportement élastique du sous-sol en fonction des modifications supposées des propriétés physiques de celui-ci. On trouvera un exemple de cette approche dans la demande de brevet EP 1.865.340, ou dans le document suivant :

Johnston, D. H., Eastwood, J. E., Shyeh, J. J., Vauthrin, R., Khan, M., and Stanley, L. R., 2000, "Using legacy seismic data in an integrated time-lapse study : Lena Field, Gulf of Mexico", The Leading Edge, 19, no. 3, 294-302.p294

Mais l'interprétation des données basées sur des différences d'amplitude peut parfois s'avérer difficile. En effet, les variations au cours du temps des propriétés physiques des formations géologiques au niveau du réservoir (liées à la production du gisement, à l'utilisation de méthodes de récupération assistée, etc.) modifient l'amplitude des ondes sismiques, mais introduisent aussi des décalages en temps dans les enregistrements sismiques (allongement ou raccourcissement des traces). Les différences de caractéristiques de deux traces sismiques peuvent donc être difficilement interprétables puisqu'elles résultent non seulement de changements d'amplitude mais aussi de décalages en temps pouvant occulter ces variations d'amplitude.

Une autre approche consiste à utiliser des techniques statistiques (ou déterministes) de reconnaissance des formes pour répartir les évènements sismiques dans plusieurs groupes, dites faciès sismiques, correspondant aux diverses lithologies et aux différents états physiques dans le réservoir (construction de cartes de faciès sismiques). Ces approches de type classification sont décrites, par exemple, dans le brevet EP 1253443 et la demande de brevet EP 1452889. Dans certains cas, les enregistrements sismiques de chaque campagne sismique sont prétraités via l'inversion stratigraphique, ce qui permet de construire des attributs sismiques plus facilement interprétables tels que la vitesse ou l'impédance des ondes élastiques. Ces méthodes nécessitent l'utilisation des données aux puits pour établir des relations statistiques entre les attributs sismiques et des paramètres caractéristiques du réservoir tels que la lithologie, la porosité, le remplissage en fluides, etc. L'utilisation de techniques d'analyse discriminante permet d'affiner la classification.

Ces méthodes ont l'inconvénient d'être plutôt qualitatives. Elles permettent de détecter les zones qui ont subi des changements mais l'estimation quantitative de l'intensité de ces changements restent difficiles.

D'autres méthodes cherchent à estimer indirectement les variations des propriétés physiques dans le réservoir sous forme de variations d'attributs sismiques obtenus par la mise en oeuvre de techniques d'inversion stratigraphique de données sismiques. L'inversion stratigraphique vise à calculer des modèles d'attributs sismiques caractéristiques du sous-sol tels que les impédances et la densité (en général dans une fenêtre centrée sur le réservoir) à partir des amplitudes des données sismiques, après ou avant addition. En prenant en compte dans le processus d'inversion les données disponibles aux puits et des contraintes physiques sur les paramètres recherchés (on parle d'information a *priori*), l'inversion stratigraphique peut fournir des valeurs quantitatives fiables de ces attributs sismiques, tout en améliorant le rapport signal sur bruit et la résolution des modèles construits.

On connaît également, par Martison, Douglas G., and Hopper, J.R., 1992, "Nonlinear seismic trace interpolation", Geophysics, 57, no.1, p.136-145., un algorithme de corrélation non linéaire pour réaliser l'alignement de deux traces sismiques adjacentes. Elle permet de déterminer un facteur d'échelle qui permet ensuite de reinterpoler des traces sismiques tout en préservant les changements de pendages et d'amplitude de chaque réflecteur sismique, sous certaines hypothèses.

Cette méthode a été adaptée pour des enregistrements 4D, on parle alors de corrélation croisée (ou cross-correlation). Elle consiste à faire glisser une fenêtre correspondant au signal d'entrée $s_1(t)$, d'une quantité $\delta t$, le long de l'axe des abscisses (axe des temps, t) et à rechercher le décalage en temps ($\delta t$) qui permet de superposer avec une différence minimale les deux signaux. Il s'agit donc d'un critère de «ressemblance» des signaux émis et reçus, qui, on le pressent, donne des résultats d'autant meilleurs que la distorsion est faible.

Pour résoudre le problème d'alignement de deux traces sismiques, une autre technique basée sur une méthode d'optimisation globale non linéaire et issue de la génétique est connue. Il s'agit de l'algorithme de Needleman-Wunsch (NW) qui est à l'origine un procédé permettant d'aligner les séquences d'acides aminés dans les protéines.

Enfin, on connaît une méthode d'analyse de plusieurs jeux de données par une inversion conjointe des jeux de données sismiques, dans laquelle une méthode de mise en correspondance de données sismiques exprimées dans des échelles de temps différentes est utilisée. Une telle méthode est décrite dans le brevet EP 1624321 et dans : Agullo, Y., Macé, D., Labat, K., Tonellot, T., Bourgeois, A., and Lavielle, M., 2004, "Joint PP and PS stratigraphic inversion for prestack time migrated multicomponent data", 74th Annual International Meeting, SEG, Expanded Abstracts, 889-892. L'approche adoptée repose sur le calcul d'un facteur d'échelle avec pour seul objectif de minimiser la dissemblance entre des modèles d'impédance calculés en utilisant séparément chaque type de données. En particulier cette méthode occulte le fait que ce facteur d'échelle, dépendant du rapport des vitesses des ondes P et des ondes S, ne peut prendre des valeurs quelconques.

De façon générale, les méthodes antérieures calculent des facteurs d'échelle qui apparaissent comme des paramètres libres et, en particulier, libres de ne pas respecter les lois de la physique. Ceci peut conduire à des modèles physiquement impossibles.

L'objet de l'invention concerne une méthode d'analyse de plusieurs jeux de données sismiques exprimées dans des échelles de temps différentes, au moyen d'une inversion stratigraphique conjointe. La méthode comporte l'utilisation d'une technique de mise en correspondance des évènements sismiques qui sont liés à une même interface ou structure en profondeur, au moyen d'un facteur d'échelle contraint par des lois physiques, de façon à construire des images, représentatives d'un réservoir souterrain, physiquement plausibles. La méthode permet ainsi de caractériser de façon fiable des réservoirs souterrains.

**La méthode selon l'invention**

L'invention concerne une méthode pour construire une image représentative d'un milieu hétérogène au moyen d'une procédure d'inversion conjointe de données sismiques exprimées dans des échelles de temps différentes t0 et t1. Elle comporte les étapes suivantes :

- on réalise une inversion séquentielle desdites données sismiques, pour déterminer une première estimation d'au moins une combinaison de grandeurs physiques à partir des données sismiques exprimées dans la première échelle de temps, et au moins une seconde estimation de ladite combinaison à partir des données sismiques exprimées dans la seconde échelle de temps ;

- on définit un facteur d'échelle $t_1(t_0)$ permettant d'exprimer des données synthétiques décrites dans une première échelle de temps $t_0$, dans une seconde échelle de temps $t_1$, au moyen d'une équation différentielle reliant, par une fonction $F$, les variations de temps de trajet d'une onde sismique $\dfrac{\partial t_1(t_0)}{\partial t_0}$ auxdites combinaisons de grandeurs physiques, et en déterminant le facteur d'échelle $t_1(t_0)$ en résolvant ladite équation différentielle au moyen d'une méthode de minimisation dans laquelle on minimise l'écart entre $\dfrac{\partial t_1(t_0)}{\partial t_0}$ et ladite fonction $F$; et

- on construit ladite image représentative d'un milieu hétérogène en réalisant ladite inversion conjointe dans laquelle on minimise une fonction coût utilisant ledit facteur d'échelle $t_1(t_0)$ de façon à évaluer un écart entre les données synthétiques et lesdites données sismiques exprimées dans ladite autre échelle de temps.

Selon l'invention les données exprimées dans des échelles de temps différentes peuvent être des données issues d'émissions d'ondes dans le milieu, telles que des ondes élastiques ou électromagnétiques.
Ces données sismiques peuvent être des données sismiques multicomposantes avant sommation.
Selon l'invention, l'une des échelles de temps représente celle des temps d'arrivées des ondes P non converties (PP), ou celle des temps d'arrivées des ondes P converties (PS), ou celle des temps d'arrivées des ondes S non converties (SS), ou celle des temps d'arrivées des ondes S converties (SP).
La combinaison de grandeurs physiques peut représenter des impédances, telles que des impédances relatives aux ondes S, et on peut alors estimer les combinaisons de grandeurs physiques en utilisant une inversion multi-composantes.
La combinaison de grandeurs physiques peut représenter des impédances, telles que des impédances relatives aux ondes P, et on peut alors estimer les combinaisons de grandeurs physiques en utilisant une inversion monocomposante.
Enfin, selon l'invention, l'inversion peut être une inversion stratigraphique comportant l'utilisation d'information a priori incluant des données mesurées in situ.

**Présentation des figures**

- La figure 1 illustre les effets d'une variation de vitesse (passage de V0 à V1) sur la distribution de réflectivité (RC) dans un milieu mesurée en fonction du temps double de propagation TWT.

- La figure 2 montre, à gauche des modèles de vitesses $V_P$ des ondes sismique de type P, aux dates $T_0$ (trait pointillé fin), $T_1$ (trait continu) et $T_2$ (trait pointillé grand) en fonction de la profondeur (axe vertical), et à droite, la figure 2 montre le décalage en temps en fonction de la profondeur (le modèle à la date $T_0$ sert de référence).

- La figure 3 illustre des modèles d'impédances P aux dates $T_0$ (trait continu) et $T_2$ (pointillés) exprimés sur leurs échelles de temps propres $t_0$ et $t_2$ (temps double de propagation des ondes P aux dates $T_0$ et $T_2$).

- La figure 4 représente des traces sismiques synthétiques 1 D correspondant aux modèles d'impédance de la figure 3.

- La figure 5 représente différentes lois initiales t1(t0).

**Description détaillée de la méthode**

Dans les roches, la vitesse et la densité sont des paramètres physiques dépendant des propriétés statiques (porosité, contenu en argiles, ...) et dynamiques (contenu en fluides, pression, température, perméabilité relative,...) de ces dernières. Il s'ensuit que si ces propriétés changent dans le sous-sol au cours du temps, les contrastes d'impédance élastique dans le milieu peuvent changer ainsi que les caractéristiques des signaux sismiques (amplitudes, temps double de trajet des ondes, ...) mesurables en surface.

Les mesures sismiques sont donc classiquement utilisées pour obtenir des informations sur les caractéristiques des formations du sous-sol : la lithologie, la géométrie, les propriétés pétrophysiques, les saturations en fluide, la pression dans le réservoir, etc. Bien que la résolution fréquentielle verticale de ces données sismiques soit plus faible que celle des données de puits, elles ont l'avantage de fournir une information latérale à plus grande échelle sur les caractéristiques du sous-sol exploré. La sismique permet d'explorer de grands volumes de sous-sol et présente l'avantage, par rapport à d'autres sources d'information, d'offrir un point de vue homogène sur l'intégralité du réservoir.

En particulier, dans le cadre de la surveillance des réservoirs d'hydrocarbures en phase de production, il est devenu fréquent de répéter l'enregistrement des mesures sismiques et de chercher à interpréter les éventuelles variations observées (dans ces signaux sismiques) en termes de variations de propriétés du réservoir tels que la saturation en fluides ou la pression.

Par exemple, dans le cadre d'un stockage de gaz naturel dans un réservoir sableux non consolidé encaissé dans de l'argile, la vitesse des ondes P et la densité diminuent quand on remplace l'eau naturelle présent dans le sol par du gaz. Ces variations de vitesse et de densité induisent une diminution de l'impédance acoustique dans le réservoir qui se traduit par une augmentation d'amplitude ("bright spot") des réflexions sismiques associées aux interfaces du réservoir (argiles-gaz-sables) [Domenico, 1977].

La diminution de vitesse dans le réservoir induit aussi une augmentation de la durée de propagation (retards temporels) des ondes associées aux réflexions sur les différentes interfaces sous le réservoir, donc des temps d'arrivée des évènements sismiques mesurables en surface. S'il n'y a pas de modifications dans les propriétés des formations au-dessus et en dessous de la zone réservoir, le décalage en temps cumulé pendant la propagation de chaque onde doit être nul au-dessus du réservoir et rester constant sous le réservoir.

La méthode est décrite dans un cadre particulier, celui de la surveillance d'un réservoir pétrolier mis en production, à l'aide de la sismique répétée dans le temps et d'enregistrements d'ondes réfléchies de type PP. Cependant, la méthode peut également être appliquée dans de nombreux autres domaines, comme par exemple l'amélioration de la caractérisation des réservoirs à l'aide de technique de sismique multi-composantes.

On dispose d'au moins deux jeux de données sismiques PP, acquis à des dates calendaires différentes, D0 et D1, mais en gardant la même géométrie et les mêmes paramètres d'acquisition (acquisition et pré-traitement optimisés pour une étude 4D).

La première acquisition, qui sert de référence, est appelée « base », et la seconde acquisition est appelée « monitor ». Les données sismiques exploitées sont des données sismiques avant sommation (données « *prestack* ») de type AVA (« *Amplitude Variation with Angle of incidence* »), c'est-à-dire pré-traitées à l'aide de techniques d'imagerie sismique classiques permettant de constituer des collections migrées en temps, et classées en fonction de l'angle de réflexion. L'analyse de ces données, qui contiennent des informations sur les variations d'amplitude des ondes réfléchies aux différentes interfaces du sous-sol en fonction des classes d'angle d'incidence considérées, permet de suivre l'évolution des réflectivités donc d'évaluer les variations des paramètres élastiques dans le réservoir. On suppose que s'il y a eu des pré-traitements spécifiques de mise en correspondance, par corrélation croisée par exemple, pour améliorer globalement l'alignement des évènements sismiques notamment au-dessus du réservoir (corrections statiques), ces pré-traitements n'ont pas affectés les décalages temporels dues aux variations locales de vitesse dans le réservoir.

L'utilisation de données avant sommation permet d'obtenir des modèles élastiques de sous-sol multi-paramètres. Le milieu est décrit à l'aide de trois paramètres: les impédances des ondes élastiques P et S (notée $I_P$ et $I_S$), et la masse volumique ou densité (notée $\rho$). Il faut deux modèles pour décrire le sous-sol aux dates D0 et D1, notés $(I_P, I_S, \rho)^{base}$ et $(I_P, I_S, \rho)^{monitor}$ respectivement, car entre les deux dates d'acquisition, les propriétés dynamiques du réservoir, telles que la saturation en fluides ou la pression, peuvent avoir changer, et donc avoir influencé les $I_P$, $I_S$, $\rho$.

Selon l'invention, la méthode comporte principalement trois étapes :

- L'étape 1 correspond à l'inversion séquentielle de chaque jeu de données sismiques PP disponible, afin d'estimer le modèle optimal de sous-sol en $(I_P, I_S, \rho)$ exprimé dans la base de temps propre au jeu de données considéré :

$$t_{D0}^{PP} \text{ ou } t_{D1}^{PP} \; ;$$

- L'étape 2 consiste en l'estimation d'une loi de transformation, de type $t_{D1}^{PP}\left(t_{D0}^{PP}\right)$ par exemple, permettant de mettre en correspondance trace à trace les données estimées sur les deux échelles de temps différentes relatives aux dates D0 et D1. Elle repose sur la mise en oeuvre d'une nouvelle méthode d'alignement des évènements sismiques liés à un même réflecteur en profondeur (mais enregistrés sur des bases de temps différentes) qui s'appuie sur la prise en compte d'une relation physique reliant les variations d'impédances P (estimées à partir des résultats des inversions séquentielles de l'étape 1) aux variations des temps de trajet des ondes P dans le milieu. En effet, l'impédance étant égale au produit de la vitesse et de la densité, les variations de vitesse, donc de temps de trajet des ondes dans le milieu peuvent être reliées aux variations d'impédance et de densité.

- L'étape 3 est l'inversion jointe proprement dite des jeux de données mis en correspondance dans l'étape 2. Elle permet d'inverser simultanément les données "base" et "monitor" pour construire deux modèles de sous-sol qui peuvent avoir des caractéristiques différentes dans certaines zones, notamment dans le réservoir que l'on suppose affecté par la production, et identiques dans d'autres zones qui ne sont pas a priori affectées par la production (zones au-dessus du réservoir par exemple). Cette étape d'inversion jointe des jeux de données mis en correspondance à l'étape 2 étend les méthodes d'inversion stratigraphique de données sismiques AVA-AVO avant sommation de type :

  o mono-composante décrite dans le brevet FR 2800473 (US 6522973) ;

  o multi-composantes décrite dans le brevet EP 1624321.

La mise en oeuvre d'une inversion simultanée des deux campagnes sismiques considérées, aux dates D0 et D1, présente l'avantage de pouvoir imposer que les modèles de sous-sol en ($I_P$, $I_S$, $\rho$) soient invariants dans les zones non affectées par la production et de mieux éliminer les bruits sismiques 4D (information non ou faiblement corrélée entre les campagnes). En effet, à cause de la non unicité des modèles ($I_P$, $I_S$, $\rho$) calculés via l'inversion stratigraphique, les différences observées entre les modèles relatifs aux dates D0 et D1 et issus d'inversions faites séparément peuvent ne pas résulter uniquement des effets de la production (changement des propriétés dynamiques tel que la saturation en fluides), même après la prise en compte des différences de temps de trajet (alignement des évènements).
Les trois étapes de la méthode sont détaillées ci-après.

## 1. Estimation d'un modèle préliminaire de réservoir ($I_P$, $I_S$, $\rho$) pour chaque jeu de données

La première étape consiste à estimer séparément deux modèles 3D (ou 2D) notés ($I_P$, $I_S$, $\rho)_{D0}$ et ($I_P$, $I_S$, $\rho)_{D1}$ exprimés en temps PP décrivant le milieu étudié aux instants D0 et D1.
Il est possible d'obtenir ces estimations à partir de la méthodologie d'inversion stratigraphique mono-composante décrite dans le brevet FR 2800473 (US 6522973). Cette méthode permet de construire des modèles optimisés représentatifs en 2D ou 3D d'un milieu hétérogène tel que le sous-sol, décrit par au moins un ou plusieurs paramètre(s) ou grandeur(s) physique(s), à partir de données enregistrées correspondant à des ondes réfléchies par le milieu et captées par des récepteurs couplés avec le milieu, en réponse à des ondes qui y sont transmises par une source, et d'information a priori incluant des données mesurées in situ.
Pour la description de cette méthodologie, on choisit une modélisation telle que les données synthétiques soient le résultat de la convolution des coefficients de réflexion par une ondelette optimale estimée pour chaque gamme d'angle d'incidence considérée et pour chaque date d'acquisition. Mais la méthodologie reste la même quelque soit la modélisation choisie. Les ondelettes sont obtenues en utilisant une méthodologie de calage puits-sismique, décrite dans le brevet FR 2800473 (US 6522973).
Plus précisément, dans cette méthode, pour chaque jeu de données observées PP, l'inversion stratigraphique permet de construire un modèle optimal qui minimise la fonction coût suivante :

$$S^{PP}(m^{PP}) = \sum_{\theta} \left\| R_{\theta}^{PP}\left(m^{PP}\right) * W_{\theta}^{PP} - D_{\theta}^{PP} \right\|^2_{(C_d^{PP})^{-1}} + \left\| m^{PP} - m_{prior}^{PP} \right\|^2_{(C_m^{PP})^{-1}}$$

$m^{PP}$ est le modèle courant représentatif du domaine de sous-sol étudié. Il est décrit par les trois paramètres $I_P$, $I_S$ et $\rho$, et est exprimé en temps PP ; l'exposant PP indique que le modèle est estimé à partir de l'inversion de données de réflexion de type PP uniquement.

$R_{\theta}^{PP}$ , est la distribution de réflectivité dans la sub-surface, correspondant au modèle courant, pour un angle d'incidence θ donné. Elle est classiquement obtenue en utilisant la formulation de Zoeppritz ou une de ses approximations comme celle d'Aki-Richards.
$W_{\theta}$ désigne l'ondelette associée à l'angle θ et aux données PP, estimée préalablement en utilisant par exemple une technique de calage puits-sismique.

$D_{\theta}^{PP}$ désigne le jeu de données sismiques AVA relatif aux réflexions PP, enregistré et exprimé en temps PP.

$m_{prior}^{PP}$ désigne le modèle a *priori* construit par interpolation des valeurs de $I_P$, $I_S$ et $\rho$ disponibles aux puits et en tenant compte des informations géologiques connues (modes de dépôts, positions des marqueurs sismiques,...).

Le premier terme de cette fonction coût mesure l'écart entre les données synthétiques correspondant au modèle courant $m^{PP}$ et les données observées, au sens de l'inverse de la matrice de covariance $C_d^{PP}$. Le deuxième terme de cette fonction coût mesure l'écart entre le modèle courant et le modèle a *priori* $m_{prior}^{PP}$ au sens de l'inverse de la matrice de covariance $C_m^{PP}$. Ces opérateurs de covariance décrivent les incertitudes respectivement sur les données PP et le modèle a *priori* PP. La construction du modèle a *priori* et des matrices de covariance reprend également les caractéristiques énoncées dans le brevet FR 2800473. L'algorithme d'inversion stratigraphique avant sommation implique la définition d'incertitudes sur le modèle a priori multi-paramètres. Ces incertitudes peuvent être prises en compte dans l'inversion à l'aide d'un opérateur de covariance exponentiel multi-paramètres, qui nécessite de définir la variance des incertitudes sur chacun des paramètres du modèle a priori ainsi que la longueur de corrélation de ces incertitudes. Cette longueur de corrélation permet de fixer la confiance que l'on a sur la géométrie du modèle a priori.

2. Estimation d'une loi de transformation

L'étape 2 consiste en l'estimation d'une loi de transformation permettant de mettre en correspondance des cubes d'attributs sismiques, résultant de l'imagerie d'une même région de la sub-surface mais exprimés sur des bases de temps différentes.

Pour pouvoir procéder dans l'étape 3 à une inversion conjointe des jeux de données multi-échelles de temps, il est nécessaire de pouvoir mettre en correspondance les évènements sismiques exprimés dans leur base de temps propre, c'est-à-dire en fonction des temps de trajet double, notée t0 et t1, associés aux modèles de vitesses aux dates D0 et D1. Cette mise en correspondance se traduit par l'estimation d'une loi de transformation t1 (t0) (ou t0(t1)) permettant de déformer les données exprimées sur la base t0 de façon à "mapper" le domaine des temps t1 (ou t0).

Selon l'invention, cette loi de déformation (ou «*warping*») du signal sismique est contrainte par l'utilisation d'une relation physique que nous allons établir dans ce paragraphe. Cette relation établit un lien entre les temps de trajet et les vitesses dans le milieu, puis entre les temps de trajet et les impédances. Il s'agit donc d'un « warping » utilisant une contrainte physique, et non des critères purement mathématiques (corrélation croisée, tests de ressemblance entre deux attributs sismiques, ....).

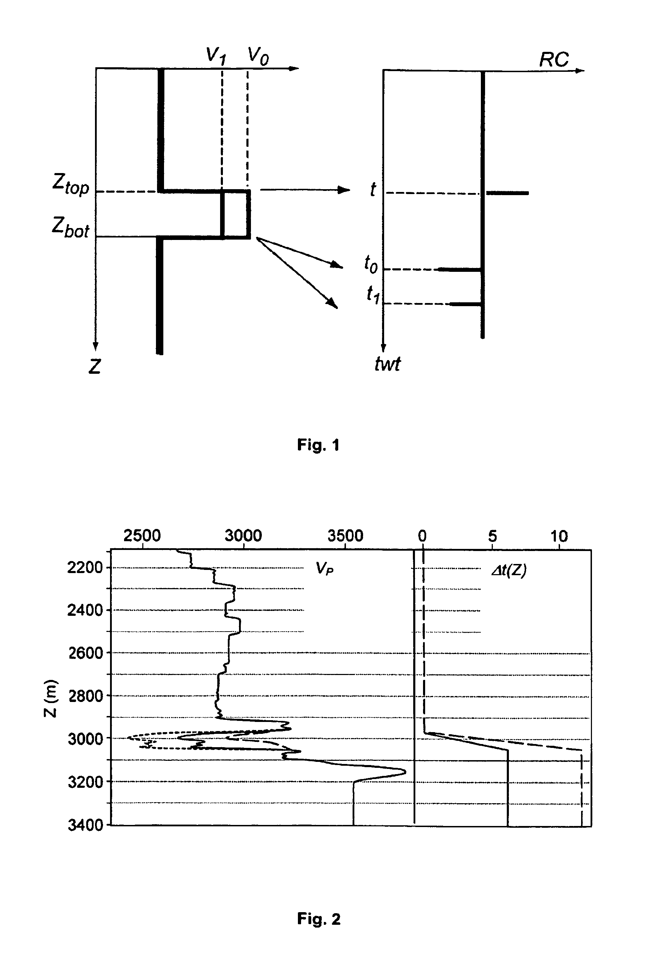

Le schéma de la figure 1 illustre les effets d'une variation de vitesse (V0 en V1) sur la distribution de réflectivité (RC) dans un milieu donné en fonction du temps double de propagation (*twt*). Dans la partie gauche du schéma, on a représenté deux profils de vitesse V0 (trait continu) et V1 (trait en pointillé) en fonction de la profondeur $Z$, correspondant à une diminution de vitesse dans le réservoir, entre les dates D0 et D1. La réservoir est situé entre les profondeurs $Z_{top}$ et $Z_{bot}$. Cela se traduit sur la figure de droite, représentant les deux distributions de réflectivité exprimées en temps double de propagation (associées aux profils de vitesse de gauche), par un décalage des pics de réflexion caractérisant l'interface située juste en dessous du réservoir. Le pic dans la base de temps t0 (trait continu) est décalé vers le bas (comparé à la position de ce pic dans la base t1), car la vitesse V1 dans le réservoir à la date D1 est plus faible que la vitesse V0 à la date D0 (temps de propagation plus grand).

On peut associer à chacun de ces deux profils de vitesse, une loi de conversion profondeur-temps :

$$t_0(Z) = \int_0^Z \frac{1}{V_0(z)}\, dz \quad (1)$$

et

$$t_1(Z) = \int_0^Z \frac{1}{V_1(z)}\, dz \quad (2)$$

Par commodité, on utilise l'indice 0 pour se référer à la date D0 et l'indice 1 pour la date D1. On peut aussi écrire :

$$(1) \Leftrightarrow \quad z(t_0) = \int V_0(t_0)dt_0 \quad \Leftrightarrow \quad dz = V_0(z(t_0))dt_0$$

et

$$(2) \Leftrightarrow \quad z(t_1) = \int V_1(t_1)dt_1 \quad \Leftrightarrow \quad dz = V_1(z(t_1))dt_1$$

Il s'en suit que :

$$\frac{dt_1}{dt_0} = \frac{V_0(z(t_0))}{V_1(z(t_1))} \quad (3)$$

L'équation (3) montre que les variations de t1 (en fonction de t0) peuvent être reliées au rapport des vitesses aux dates d0 et d1. En effet, en calculant la dérivée de t1(t0) par rapport à t0, on obtient :

$$\frac{\partial t_1(t_0)}{\partial t_0} = \frac{\partial t_1(t_0)}{\partial z(t_0)}\frac{\partial z(t_0)}{\partial t_0} = \frac{\partial t_1(t_0)}{\partial z(t_1)}\frac{\partial z(t_1)}{\partial z(t_0)} \times \frac{\partial z(t_0)}{\partial t_0} = \frac{1}{V_1(t_1(t_0))} \times 1 \times V_0(t_0)$$

Remarque: $\dfrac{\partial z(t_1)}{\partial z(t_0)} = 1$ car $z(t_1) = z(t_0)$ ($t_1$ et $t_0$ pointent vers la même profondeur z, voir la figure 1)

Par conséquent, l'équation différentielle suivante (noté équation E1) permet de relier les variations de temps de trajet quand la vitesse dans le milieu change :

$$\frac{\partial t_1(t_0)}{\partial t_0} = \frac{V_0(t_0)}{V_1(t_1(t_0))} \quad (E1)$$

En utilisant l'équation E1, on peut a *priori* construire une loi de transformation $t_1(t_0)$ dont le taux de variations est relié aux rapports des vitesses entre les deux milieux. Mais on ne connait pas explicitement les vitesses $V_1(t_1)$ et $V_0(t_0)$ dans le milieu aux dates D0 et D1.

Par contre, l'inversion stratigraphique mise en oeuvre dans l'étape 1 permet d'accéder aux impédances des ondes P et S et à la densité du milieu à partir des données AVA. Donc, théoriquement, on pourrait déduire les vitesses de ces modèles d'impédance et de densité, car l'impédance est le produit de la vitesse par la densité. On a :

$$\frac{V_0}{V_1} = \frac{I_0}{I_1}\frac{\rho_1}{\rho_0}$$

Mais dans la pratique ce résultat s'avère peu satisfaisant. En effet, le modèle de densité issu de l'inversion élastique multi-paramètres des données AVA est généralement un paramètre mal déterminé, du moins comparé à l'impédance P qui est le paramètre le mieux déterminé.

Par contre, il existe une relation simple entre la vitesse des ondes élastiques (P ou S) et la densité, dans la plupart des roches sédimentaires : Gardner, G.H.F., Gardner, L.W., and Gregory, A.R., 1974, "Formation velocity and density - The diagnostic basics of stratigraphic traps", Geophysics, 39, 770-780. Cette relation est du type: $\rho \cong aV^b$ où a et b sont des constantes dépendant du type de roche (ou lithologie). $b \approx 1/4$ dans la plupart des cas.

Dans le cas de la sismique répétée, où l'on considère un même point milieu (à la profondeur z) mais mesuré à deux dates différents (D0 et D1), si on considère que la lithologie ne varie pas en ce point, on a les mêmes coefficients a et b pour les dates D0 et D1: $I_0 \cong aV_0^{1+b}$ et $I_1 \cong aV_1^{1+b}$. L'équation E1 peut donc être ré-écrite comme une fonction des impédances $I_1(t_1)$ et $I_0(t_0)$ (équation E2):

$$\frac{\partial t_1(t_0)}{\partial t_0} \cong \left( \frac{I_0(t_0)}{I_1(t_1(t_0))} \right)^{\frac{1}{1+b}} \qquad (E2)$$

Comme $b \cong 1/4$, on peut, en première approximation, considérer que l'exposant dans l'équation E2 est de l'ordre de 1. On peut dans ce cas substituer, dans l'équation E1, les vitesses $V_0$ et $V_1$ par les impédances issues des inversions séquentielles $I_0$ et $I_1$, aboutissant ainsi a l'équation E3 :

$$\frac{\partial t_1(t_0)}{\partial t_0} \approx \frac{I_0(t_0)}{I_1(t_1(t_0))} \qquad (E3)$$

_Remarque_ : on retrouve aussi l'approximation ci-dessus, si on suppose que les variations de densités entre les dates d0 et d1 sont négligeables comparées aux variations d'impédances, c'est-à-dire en posant $\rho_0 \cong \rho_1$ dans l'équation E1.

_Généralisation de l'équation E1 à d'autre type d'onde_

Dans le cas de données multi-composantes homogènes (i.e. les ondes incidentes et réfléchies restent du même type P ou S) comme par exemple les données multi-composantes PP-SS, les données PP et SS sont acquises à une même date calendaire avec la même géométrie d'acquisition. La base 0 est celle des données PP et la base 1 est celle des données SS. En considérant un milieu isotrope, ou des trajets à incidence normal dans un milieu VTI, la base de temps $t_{PP}$ des données PP et de temps $t_{SS}$ des données SS sont reliées par la relation suivante :

$$\int_z t_{SS} = \int_z \left( \frac{V_P}{V_S} \right) \times t_{PP}$$

Il s'en suit que :

$$\frac{\partial t_{SS}}{\partial t_{PP}} = \left( \frac{V_P}{V_S} \right).$$

Dans l'étape 1 de la méthode, l'inversion stratigraphique des données PP permet d'avoir une bonne estimation des impédances P et celle des données SS fournit la meilleure estimation des impédances S. On suppose aussi que les deux modèles de densités déterminées par l'une et l'autre de ces inversions, sont très proches, car la densité est une caractéristique du milieu indépendant du type d'onde utilisé pour sa mesure. On peut donc poser :

$$\frac{V_0}{V_1} \cong \frac{V_P}{V_S} = \frac{I_{PP}}{I_{SS}}$$

L'équation E1 devient l'équation E4 :

$$\frac{\partial t_{SS}(t_{PP})}{\partial t_{PP}} = \frac{I_{PP}(t_{PP})}{I_{SS}(t_{SS}(t_{PP}))} \qquad\qquad (E4)$$

Dans le cas de données avec conversion d'onde, comme par exemple les données multi-composantes PP-PS, les données PP et PS (onde incidente en onde P réfléchie en onde S) sont acquises à une même date calendaire avec la même géométrie d'acquisition. Les bases de représentation des données PP et PS sont les temps PP et PS. La loi de transformation recherchée dans ce cas est $t_{PS}(t_{PP})$. Or,

$$t_{PP} = 2 \times t_P$$

et

$$t_{PS} = t_P + t_S = t_P\left(1 + \frac{V_P}{V_S}\right) = \frac{1}{2}t_{PP}\left(1 + \frac{V_P}{V_S}\right)$$

Dans l'étape 1, l'inversion des données PP donne $I_{PP}(t_{PP})$ et l'inversion des données PS permet d'avoir une meilleure estimation $I_S(t_{PS})$ que le $I_S(t_{PP})$ obtenu à partir des données PP donc sur la base des temps PP. Le rapport du modèle optimal $I_{PP}(t_{PP})$ et du modèle optimal $I_S(t_{PS})$ transformé en temps PP, soit $I_S(t_{PS}(t_{PP}))$ est une bonne approximation du rapport $V_P/V_S$ dans le milieu.

$$t_{PS}(t_{PP}) = \frac{1}{2}t_{PP}\left(1 + \frac{V_P(t_{PP})}{V_S(t_{PS}(t_{PP}))}\right) = \frac{1}{2}t_{PP}\left(1 + \frac{\rho(t_{PP})V_P(t_{PP})}{\rho(t_{PP})V_S(t_{PS}(t_{PP}))}\right) = \frac{1}{2}t_{PP}\left(1 + \frac{I_{PP}(t_{PP})}{\rho(t_{PP})V_S(t_{PS}(t_{PP}))}\right)$$

On considère que le modèle de densité obtenu sur la base PP à partir des données PP et le modèle de densité calculé à partir des données PS, mis à l'échelle des temps PP sont équivalents. Il s'en suit que:

$$t_{PS}(t_{PP}) \approx \frac{1}{2}t_{PP}\left(1 + \frac{I_{PP}(t_{PP})}{\rho(t_{PS}(t_{PP}))V_S(t_{PS}(t_{PP}))}\right) \quad t_{PS}(t_{PP}) = \frac{1}{2}t_{PP}\left(1 + \frac{I_P^{PP}(t_{PP})}{I_S^{PS}(t_{PS}(t_{PP}))}\right)$$

On obtient ainsi l'équation E5 :

$$\frac{\partial t_{PS}(t_{PP})}{\partial t_{PP}} = \left(1 + \frac{I_P^{PP}(t_{PP})}{I_S^{PS}(t_{PS}(t_{PP}))}\right) \qquad\qquad (E5)$$

De façon générale, on peut définir une équation différentielle reliant, par une fonction F, les variations de temps de trajet d'une onde sismique $\dfrac{\partial t_1(t_0)}{\partial t_0}$ aux combinaisons de grandeurs physiques (modèles $m_0$ pour l'échelle de temps $t_0$ et modèle $m_1$ pour l'échelle de temps $t_1$) issus des inversions séquentielles, telles que $(I_P, I_S, \rho)_{D0}$ et $(I_P, I_S, \rho)_{D1}$ dans le cadre de la sismique 4D :

$$\frac{\partial t_1(t_0)}{\partial t_0} = F(m_1, m_0)$$

*Résolution de l'équation E3 et calcul des décalages en temps*

De façon générale, on détermine le facteur d'échelle $t_1(t_0)$ en résolvant l'équation différentielle au moyen d'une méthode de minimisation dans laquelle on minimise l'écart entre $\dfrac{\partial t_1(t_0)}{\partial t_0}$ et la fonction $F$: on recherche donc $t_1(t_0)$ qui minimise $\left\| \dfrac{\partial t_1(t_0)}{\partial t_0} - F(m_1, m_0) \right\|^2$

Dans la pratique, pour résoudre l'équation E3 (ou toutes ces autres formes E2, E4, ...), on utilise la méthode dite des moindres carrés. On cherche la fonction t1(t0) qui minimise la fonction coût J suivante:

$$J(t_1(t_0)) = \sum_{\theta} \left\| I_1^{Pseq}(t_1(t_0)) \frac{\partial t_1(t_0)}{\partial t_0} - I_0^{Pseq}(t_0) \right\|^2$$

L'exposant « seq » indique que cette valeur provient de l'inversion séquentielle (étape1).

Le problème à résoudre ici est fortement non linéaire. On peut "diminuer" cette non linéarité en partant d'un modèle initial, $t_1(t_0)$initial, pas trop loin de la solution recherchée, et en cherchant des variations $\delta t$ faibles autour de ce modèle initial: $t_1(t_0) = t_1(t_0)$initial$^+ \delta t$.

On peut utiliser une méthode itérative pour estimer $\delta t$ par approximations successives telle que la méthode du gradient conjugué. Cet algorithme permet de résoudre des systèmes d'équations linéaires dont la matrice est symétrique et définie positive. Elle repose sur la recherche de directions successives permettant d'atteindre la solution exacte du système étudié. Le coût en temps de calcul est beaucoup plus faible que dans le cas de la méthode de Newton, qui nécessite des calculs de dérivées secondes. L'utilisation de cette méthode a de nombreux autres avantages. On peut citer entre autres sa stabilité, et la possibilité d'ajouter un terme de régularisation, c'est-à-dire, un modèle $t_1(t_0)$ a *priori* en utilisant une approche similaire à celle mise au point dans le cadre de l'inversion stratigraphique utilisée dans l'étape 1. On peut ainsi imposer que la loi de transformation t1(t0) est corrélée latéralement, le long des lignes stratigraphiques. La fonction coût peut être alors de la forme suivante :

$$J^*(t_1(t_0)) = J(t_1(t_0)) + \left\| t_1(t_0) - t_1^{apriori}(t_0) \right\|^2_{CM}$$

où $C_M$ est une matrice de covariance, similaire à celle décrite dans l'étape 1, décrivant les incertitudes sur le modèle $t_1(t_0)$ *a priori.*

*Paramétrisation :*

Pour décrire $t_1(t_0)$, $t_1(t_0)$initial et $\delta t(t_0)$, on peut choisir une représentation sur un nombre limité de fonctions de base, par exemple des fonctions "B-splines", exprimées sur la base de temps de référence $t_0$. Cette paramétrisation permet d'accéder rapidement aux dérivées de $t_1(t_0)$, $t_1(t_0)$initial et $\delta t(t_0)$.

*Choix de la loi initiale t1(t0) :*

On note $\Delta t$ le décalage en temps (exprimé sur la base de référence t0) en chaque point du milieu calculé trace à trace. Soit $\Delta t = t_1(t_0) - t_0$.

- Si on suppose que les $\Delta t$ restent faibles, ce qui peut être le cas quand on étudie de la sismique mono-composante répétée dans le temps, mais après une courte période de production : on peut partir d'une fonction $t_1(t_0)$ initial égale à la fonction identité, c'est-à-dire $t_1(t_0)$ initial = $t_0$.

- Dans le cas de la sismique multi-composantes, ou toujours de la sismique répétée dans le temps mais avec des décalages conséquents, on peut aussi partir d'une interpolation linéaire des temps de trajet double pointés le long d'au moins deux horizons géologiques pour chacun des jeux de données sismiques que l'on veut inverser conjointement. Ces horizons pointés, qui représentent l'interprétation de réflecteurs géologiques à partir des évènements observés dans la sismique (ayant une continuité latérale) et aux puits, doivent recouper la zone d'intérêt. Il s'agit par exemple des interfaces au toit et à la base du réservoir.

On peut aussi construire une transformation initiale composée de plusieurs segments d'interpolation linéaire entre des couples d'horizons mis en correspondance ([H1(t0), H1(t1)], [H2(t0), H2(t1)] ; [H3(t0), H3(t1)] ; ...).

Dans le cas des données mono-composantes (PP ou SS) on peut ajouter comme contraintes supplémentaires: (1) qu'au-dessus du réservoir, $\Delta t$ est nul, et (2) qu'en dessous du réservoir, $\Delta t$ est égal au décalage en temps cumulé dans le réservoir et mesurable à partir du pointé en temps de deux horizons situés en dessous du réservoir. Ces contraintes découlent du fait que les variations de vitesse dues à la production sont théoriquement nulles en dehors (au-dessus et en dessous) du réservoir.

Les figures 2, 3 et 4 montrent un exemple d'application de cette étape 2. La figure 2 montre, à gauche, des modèles de vitesses $V_P$ des ondes sismique de type P, aux dates T0 (trait pointillé fin), T1 (trait continu) et T2 (trait pointillé grand) en fonction de la profondeur (axe vertical). Le modèle à la date T0 provient d'un log réel de vitesse mesurée dans un puits, dans une zone pétrolière en exploitation. Le modèle à la date T1 est obtenu en diminuant uniformément de 10% les vitesses mesurées à la date T0 dans l'ensemble du réservoir. Le modèle à la date T2 a été obtenu en augmentant uniformément de 20% les vitesses mesurées en fonction de la profondeur à la date T0 puis en modifiant artificiellement le log obtenu de façon non uniforme afin d'obtenir, après la conversion profondeur-temps, un décalage en temps plus important entre les logs aux dates T0 et T2, mais variant de façon non linéaire (faiblement non-linéaire) dans le réservoir. La figure 2 montre, à droite, le décalage en temps ($\Delta t$ (z)) en fonction de la profondeur (le modèle à la date T0 sert de référence). Pour la date T1 (trait continu), on a un décalage maximal au niveau de la base du réservoir de l'ordre de 6 ms (en temps double), soit à peine plus d'un échantillon (pas d'échantillonnage : 4ms). Pour la date T2 (trait pointillé grand), le décalage construit artificiellement est de l'ordre de 12 ms et reste constant en dessous du réservoir, c'est-à-dire au-delà de 2420 ms (dans la base de référence t0). Ce modèle synthétique a été construit de façon à avoir une variation non linéaire des décalages dans le réservoir (variations non linéaires des vitesses).

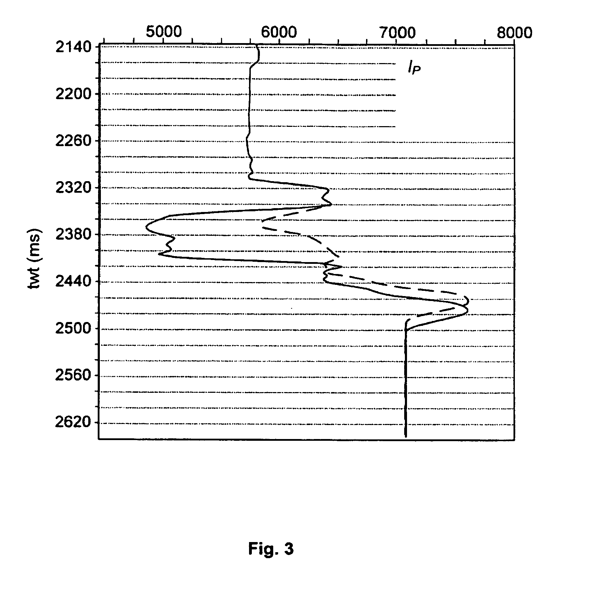

Comme illustré sur la figure 3, on en déduit les modèles d'impédance P $(I_P)$ en fonction du temps (*twt*) aux deux dates extrêmes notées T0 (référence) et T2 (monitor). Ces modèles d'impédances P aux dates T0 (trait continu) et T2 (pointillés) sont exprimés sur leurs échelles de temps propres t0 et t2 (temps double de propagation des ondes P aux dates T0 et T2). Ils ont été obtenus à partir du produit des logs de vitesse VP présentés dans la figure 2 par le log de densité mesuré à la date T0, et en utilisant les logs de vitesse pour calculer les lois de conversion profondeur-temps, t0(z) et t2(z). On observe qu'il y a un décalage entre les temps double de propagation des ondes P à partir de 2340 ms, qui correspond au toit du réservoir. Ce décalage atteint 12 ms et reste constant en dessous du réservoir, c'est-à-dire 2420 ms (dans la base de référence t0). Ces modèles synthétiques ont été construits de façon à avoir une variation non linéaire des décalages dans le réservoir. On utilise ces modèles d'impédances décalés dans le temps et présentant des différences d'amplitude pour appliquer l'étape 2 de la méthode et estimer une loi de mise à la même échelle t2(t0), et par la suite les décalages en temps [t2-t0](t0).

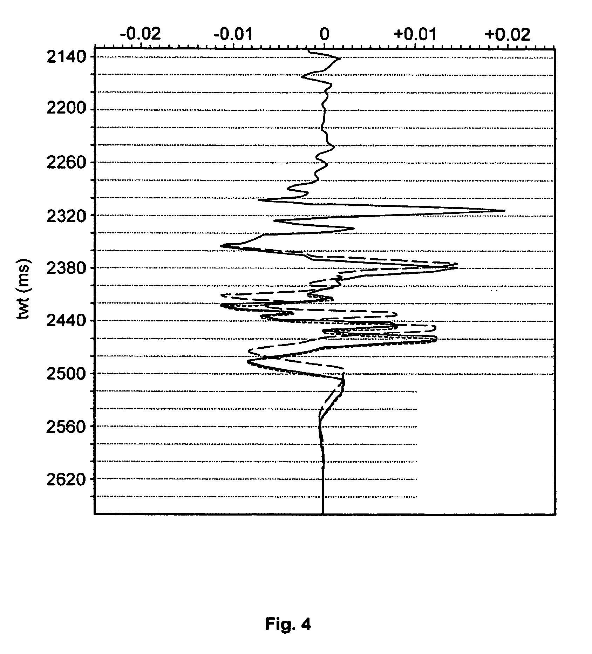

La figure 4 compare la sismique correspondant au modèle à la date T2 après la mise à l'échelle. Elle illustrent des traces sismiques synthétiques 1 D correspondant aux modèles d'impédance de la figure 3 : modèle à la date T2 exprimée dans son échelle de temps propre t2 (trait pointillé grand) ; modèle à la date T2 exprimée dans l'échelle de temps t0 en utilisant la méthode de mise à l'échelle basée sur une contrainte physique présentée dans la méthode (trait pointillé fin) ; modèle à la date T2 exprimée dans l'échelle de temps t0 en utilisant la loi exacte t2(t0) (trait continu noir). La technique de mise en correspondance des évènement sismiques présentée dans la méthode permet de construire une loi de transformation t2(t0) fiable et d'obtenir une représentation correcte de la sismique acquise à la date T2 sur l'échelle des temps de la date de référence T0 (la trace au trait pointillé fin est proche de la trace au trait continu noir).

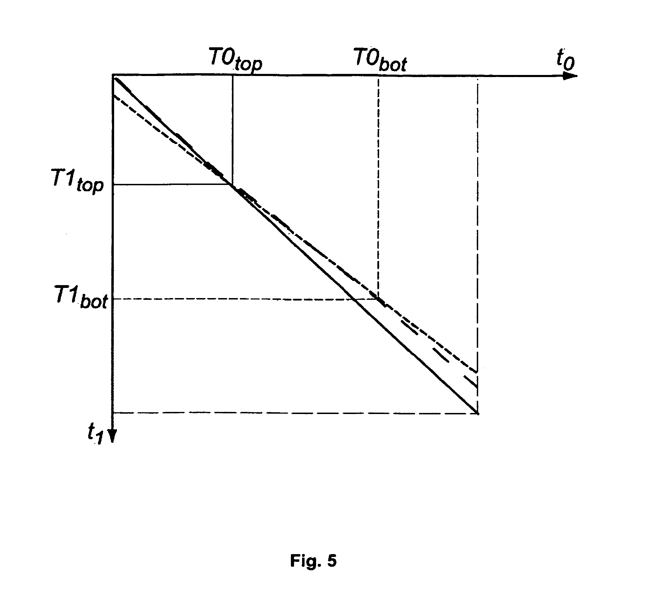

La loi initiale t2(t0) utilisée a été construite en procédant à une interpolation linéaire entre les temps double pointés au toit et à la base du réservoir sur la sismique de « base » et en posant qu'au-dessus du réservoir, $\Delta t$ est nul, et qu'en dessous, $\Delta t$ est égal au décalage de temps cumulé dans le réservoir (soit 12 ms dans ce cas). Elle est représentée sur la figure 5 qui montre aussi deux autres exemples de lois initiales 1D, construites pour faire des tests en utilisant :

1) la loi Identité t1=t0(en trait continu noir) ;

2) une interpolation linéaire passant par T1top (T0top et T1 bot (T0bot) (trait pointillé fin) ;

3) une interpolation linéaire passant par les points de coordonnées T1top (T0top) et T1bot (T0bot) comme précédemment mais on contraint en plus la loi initiale à être égale à l'Identité au-dessus du réservoir et on impose un décalage constant en-dessous du réservoir (trait pointillé grand).

C'est une loi de type 3 qui a été utilisée dans les tests 1 D présentés dans les figures 2, 3 et 4. Les temps T0top, T0bot, T1top, T1bot correspondent respectivement aux temps mesurés sur les enregistrements sismiques aux dates T0 (échelle de temps t0) et T1 (échelle de temps t1) et correspondant aux réflexions au toit (top) et à la base (bot) du réservoir.

3. Inversion conjointe

L'inversion conjointe de plusieurs jeux de données sismiques exprimées sur des bases de temps différentes permet:

- dans le cas d'une sismique mono-composante (PP) répétée dans le temps, d'améliorer l'estimation des variations d'attributs sismiques liées aux paramètres de production. Cette troisième étape de la méthode conduit à la construction de deux modèles optimaux $(I_P, I_S, \rho)_{D0}$ et $(I_P, I_S, \rho)_{D1}$ qui peuvent être similaires ou différentes dans chaque unité stratigraphique selon que celle-ci soient une zone affectée ou non par l'exploitation du réservoir. Ces modèles sont compatibles avec les variations d'amplitude observées entre les deux campagnes de mesures et avec la loi de transformation $t_1(t_0)$ permettant de représenter les modèles sur l'une ou l'autre des bases de temps $t_0$ et $t_1$ des données.

- s'il s'agit de sismique multi-composantes avec ou sans conversion des ondes (PP-SS, PP-PS,...): cette troisième étape permet de construire un modèle optimal unique $(I_P, I_S, \rho)$ compatible avec l'ensemble des données sismiques disponibles, et donc d'améliorer la caractérisation des paramètres élastiques du réservoir. L'inversion simultanée des informations contenues dans les données sismiques multi-composantes permet de réduire le nombre de solutions possibles et de construire des modèles plus réalistes. En particulier, les informations contenues dans les ondes S et les ondes converties (SS, PS,...) permettent d'améliorer les modèles d'impédance S et de densité.

Plus précisément, dans le cas particulier de la sismique mono-composante 4D, la méthode permet de construire deux modèles de sous-sol $m_{D0}$ et $m_{D1}$ distincts, correspondant aux deux jeux de données mesurées aux dates D0 (base) et D1 (monitor) respectivement, en minimisant la fonction coût suivante :

$$J(m_{D0}, m_{D1}) = \sum_\theta \left\| d_\theta^{synt}(m_{D0}(t_0)) - d_\theta^{obs}(t_0) \right\|_{C_D^{-1}}^2 + \sum_\theta \left\| d_\theta^{synt}(m_{D1}(t_{D1}(t_0))) - d_\theta^{obs}(t_1) \right\|_{C_D^{-1}}^2$$

$$+ \left\| m_{D0}(t_0) - m_{D0}^{prior}(t_0) \right\|_{C_M^{-1}}^2 + \left\| m_{D1}(t_1) - m_{D0}^{prior}(t_{D1}(t_0)) \right\|_{C_M^{-1}}^2$$

On pose $m_{D0}^{prior} = m_{D1}^{prior}$, car on considère que les deux modèles recherchés ont une même composante basse fréquence, partie qui, on le rappelle, n'est pas mise à jour par l'inversion. En effet, l'inversion permet de mettre à jour les modèles uniquement dans la bande passante des données sismiques.

De plus, la mise à jour des modèles peut se faire dans chaque unité stratigraphique composant le modèle en utilisant :

- soit toutes les données sismiques disponibles si on veut que les modèles soient identiques dans cette unité ;

- ou soit les données disponibles sur la "base" ou sur le "monitor" uniquement. Dans ce cas, les deux modèles peuvent être différents dans cette unité.

La réalisation de cette pondération se fait lors du calcul du gradient de la fonction coût, servant à la recherche du minimum.

A la première itération, on pose $m_{D0}(t0) = m_{D0}^{prior}$ et $m_{D1}(t1) = m_{D1}^{prior}$. La mise à jour des modèles se fait ensuite dans la base de temps dite de référence t0 (associée à la date D0). Avant chaque mise à jour, on utilise donc la transformation réciproque $t_0(t_1)$ (qu'on peut facilement déduire de $t_1(t_0)$) pour exprimer le modèle courant $m_{D1}(t1)$ dans la base t0 (voir la Figure 6). On peut ensuite calculer la sismique synthétique associée aux modèles dans chaque base propre aux données. Celle-ci peut être ensuite comparée à la sismiques mesurée à chaque dates D0 et D1.

L'invention possède ainsi de nombreux avantages :

- Les calages puits-sismique et les inversions séquentielles de l'étape 1 constituent un bon opérateur de pré-traitement des données sismiques 4D permettant d'augmenter le rapport signal sur bruit (mieux repérer l'information 4D), et donc de calculer des attributs sismiques plus robustes et fiables ($I_P$ par exemple) pour l'étape 2 de la méthode.

- Dans l'étape 2, on utilise une relation physique existant entre les variations d'impédances (donc de vitesses) et les variations des temps de propagation des ondes dans le milieu exploré. Ceci permet de garantir une origine physique des décalages en temps estimés. La plupart des autres techniques de mise en correspondance des évènements sismiques utilisent les traces sismiques directement et des outils mathématiques de corrélation croisée ; et l'origine physique des décalages en temps n'est pas exploitée.

- Une contrainte géologique, peut être introduite dans la fonction objective liée à l'étape 2 le calcul de t1(t0), afin d'améliorer l'estimation des lois de transformation.

- Dans l'étape 3 de la méthode, les données sismiques restent dans leur base propre et ne subissent pas de déformations ("warping") avant ou pendant l'inversion jointe. La modélisation sismique basée sur une convolution 1 D utilisant les ondelettes déterminées au préalable dans la phase de calage puits-sismique inclus dans l'étape 1 reste donc valable.

- Les décalages en temps peuvent être estimés à partir des impédances pour plusieurs configurations (données PP (ou SS) espacées dans le temps, données PP et PS, données PP et SS ...) avec un nombre d'hypothèsse très limité sur les relations existantes entre les paramètres de ces modèles. La principale hypothèse concerne la loi de Gardner reliant la vitesse à la densité, dont la validité est assez largement vérifiée dans les roches sédimentaires.

- Il y a peu d'hypothèse sur la nature des variations 4D des propriétés physiques du sous-sol.

La méthode selon l'invention peut être utilisée pour analyser les données sismiques provenant d'expériences de sismique répétée dans le temps (sismique 4D), effectuées dans le cadre d'études sur l'évolution de la distribution des fluides présents dans le sous-sol, sous forme d'un ou plusieurs réservoirs. Ces réservoirs peuvent contenir des hydrocarbures, des fluides d'origine naturelle (gaz naturel, eaux souterraines,...), des fluides injectés volontairement dans le sol (pour le stockage du $CO_2$ ou de gaz naturel, ou encore pour améliorer les taux de récupération dans les puits producteurs, etc.). L'invention permet d'obtenir une estimation fiable d'attributs sismiques tels que les variations d'impédance élastique dans le sous-sol, qui peuvent être ensuite utilisés dans le cadre de l'exploration pétrolière, par exemple, comme contraintes dans la construction et la mise à jour du modèle géologique de réservoir, car des informations dynamiques très importantes peuvent être extraites de la sismique 4D. Celle-ci peut notamment permettre la détection des voies migratoires préférentielles, des zones de piégeage, des défauts de drainage ou d'étanchéité dans le réservoir. Ces informations sont déterminantes pour la mise en place de schémas optimaux d'exploitation des champs. L'intégration de ces contraintes sismiques est d'ailleurs devenue une préoccupation forte dans l'industrie pétrolière. La méthode permet donc, dans le cadre de l'industrie pétrolière, d'estimer quantitativement des changements de propriétés physiques dans le sous-sol en interprétant les changements d'amplitudes et de temps de propagation des ondes sismiques réfléchies aux différentes interfaces géologiques présentes dans le sous-sol, mesurables en surface dans des expériences de sismique réflexion.

La méthode peut également s'appliquer dans le cadre de la surveillance des volcans, le réservoir étant alors la chambre magmatique qui contient des gaz et de la lave. En effet, les propriétés physiques des fluides d'origine volcanique peuvent évoluer dans le temps pour différentes raisons (changement de pression, de température, des saturations partielles, etc.). Si les changements de propriétés élastiques sont suffisamment importants, ils peuvent être détectés en procédant à l'enregistrement des amplitudes des ondes sismiques réfléchies sur les interfaces chambre magmatique-encaissant, à au moins deux dates différentes.

Par ailleurs, la méthode selon l'invention peut être utilisée pour interpréter les données sismiques multi-composantes acquises dans le cadre d'une campagne sismique d'exploration (2D ou 3D), l'interprétation conjointe de différents types de données sismiques mesurées permettant d'améliorer la caractérisation des réservoirs ou plus généralement du sous-sol.

**Revendications**

1. Méthode pour construire une image représentative d'un milieu hétérogène au moyen d'une procédure d'inversion conjointe de données sismiques exprimées dans des échelles de temps différentes $t_0$ et $t_1$, **caractérisée en ce que** l'on réalise les étapes suivantes :

   - on réalise une inversion séquentielle desdites données sismiques, pour déterminer une première estimation d'au moins une combinaison de grandeurs physiques à partir des données sismiques exprimées dans la première échelle de temps, et au moins une seconde estimation de ladite combinaison à partir des données sismiques exprimées dans la seconde échelle de temps ;
   - on définit un facteur d'échelle $t_1(t_0)$ permettant d'exprimer des données synthétique décrites dans une première échelle de temps $t_0$, dans une seconde échelle de temps $t_1$, au moyen d'une équation différentielle reliant, par une fonction $F$, les variations de temps de trajet d'une onde sismique $\dfrac{\partial t_1(t_0)}{\partial t_0}$ auxdites combinaisons de grandeurs physiques, et en déterminant le facteur d'échelle $t_1(t_0)$ en résolvant ladite équation différentielle au moyen d'une méthode de minimisation dans laquelle on minimise l'écart entre $\dfrac{\partial t_1(t_0)}{\partial t_0}$ et ladite fonction $F$; et
   - on construit ladite image représentative d'un milieu hétérogène en réalisant ladite inversion conjointe dans laquelle on minimise une fonction coût utilisant ledit facteur d'échelle $t_1(t_0)$ de façon à évaluer un écart entre les données synthétiques et lesdites données sismiques exprimées dans ladite autre échelle de temps.

2. Méthode selon la revendication 1, dans laquelle lesdites données exprimées dans des échelles de temps différentes sont des données issues d'émissions d'ondes dans le milieu.

3. Méthode selon la revendication 2, dans laquelle les ondes émises dans le milieu sont des ondes élastiques ou électromagnétiques.

4. Méthode selon l'une des revendications précédentes, dans laquelle les données sont des données sismiques multicomposantes avant sommation.

5. Méthode selon l'une des revendications précédentes, dans laquelle l'une des échelles de temps représente celle des temps d'arrivées des ondes P non converties (PP).

6. Méthode selon l'une des revendications précédentes, dans laquelle l'une des échelles de temps représente celle des temps d'arrivées des ondes P converties (PS).

7. Méthode selon l'une des revendications précédentes, dans laquelle l'une des échelles de temps représente celle des temps d'arrivées des ondes S non converties (SS).

8. Méthode selon l'une des revendications précédentes, dans laquelle l'une des échelles de temps représente celle des temps d'arrivées des ondes S converties (SP).

9. Méthode selon l'une des revendications précédentes, dans laquelle la combinaison de grandeurs physiques représente des impédances.

10. Méthode selon la revendication 9, dans laquelle les impédances sont des impédances relatives aux ondes S.

11. Méthode selon la revendication 10, dans laquelle l'estimation des combinaisons de grandeurs physiques comporte l'utilisation d'une inversion multi-composantes.

12. Méthode selon la revendication 9, dans laquelle les impédances sont des impédances relatives aux ondes P.

13. Méthode selon la revendication 12, dans laquelle l'estimation des combinaisons de grandeurs physiques comporte l'utilisation d'une inversion monocomposante.

**14.** Méthode selon les revendications 11 et 13, dans laquelle ladite inversion est une inversion stratigraphique comportant l'utilisation d'information a priori incluant des données mesurées in situ.

**Claims**

**1.** A method of constructing an image representative of a heterogeneous medium, by means of a procedure of joint inversion of seismic data expressed in different time scales to and $t_1$, **characterized in that** it comprises the following stages:

- carrying out sequential inversion of said seismic data in order to determine a first estimation of at least one combination of physical quantities from the seismic data expressed in the first time scale, and at least a second estimation of said combination from the seismic data expressed in the second time scale,
- defining a scale factor $t_1(t_0)$ allowing synthetic data described in a first time scale $t_0$ to be expressed in a second time scale $t_1$, by means of a differential equation relating, by a function F, the traveltime variations of a seismic wave $\dfrac{\partial t_1(t_0)}{\partial t_0}$ to said combinations of physical quantities, and by determining scale factor $t_1(t_0)$ by solving said differential equation by means of a minimization method wherein the difference between $\dfrac{\partial t_1(t_0)}{\partial t_0}$ and said function F is minimized, and
- constructing said image representative of a heterogeneous medium by carrying out said joint inversion wherein a cost function using said scale factor $t_1(t_0)$ is minimized, so as to evaluate a difference between the synthetic data and said seismic data expressed in said other time scale.

**2.** A method as claimed in claim 1, wherein said data expressed in different time scales are data resulting from wave emissions in the medium.

**3.** A method as claimed in claim 2, wherein the waves emitted in the medium are elastic or electromagnetic waves.

**4.** A method as claimed in any one of the previous claims, wherein the data are prestack multi-component seismic data.

**5.** A method as claimed in any one of the previous claims, wherein one of the time scales represents the scale of the arrival times of the non-converted P waves (PP).

**6.** A method as claimed in any one of the previous claims, wherein one of the time scales represents the scale of the arrival times of the converted P waves (PS).

**7.** A method as claimed in any one of the previous claims, wherein one of the time scales represents the scale of the arrival times of the non-converted S waves (SS).

**8.** A method as claimed in any one of the previous claims, wherein one of the time scales represents the scale of the arrival times of the converted S waves (SP).

**9.** A method as claimed in any one of the previous claims, wherein the combination of physical quantities represents impedances.

**10.** A method as claimed in claim 9, wherein the impedances are impedances relative to S waves.

**11.** A method as claimed in claim 10, wherein estimation of the combinations of physical quantities comprises using a multi-component inversion.

**12.** A method as claimed in claim 9, wherein the impedances are impedances relative to P waves.

**13.** A method as claimed in claim 12, wherein estimation of the combinations of physical quantities comprises using a mono-component inversion.

**14.** A method as claimed in claims 11 and 13, wherein said inversion is a stratigraphic inversion comprising using a priori information including in-situ measured data.


**Patentansprüche**

**1.** Verfahren zum Konstruieren eines für ein heterogenes Medium repräsentativen Bildes mittels einer Prozedur der gemeinsamen Inversion (joint inversion) von seismischen Daten, die in unterschiedlichen Zeitmaßstäben $t_0$ und $t_1$ ausgedrückt sind, **dadurch gekennzeichnet, dass** die folgenden Schritte ausgeführt werden:

- Es wird eine sequentielle Inversion der seismischen Daten durchgeführt, um eine erste Schätzung mindestens einer Kombination von physikalischen Größen ausgehend von den in dem ersten Zeitmaßstab ausgedrückten seismischen Daten und mindestens eine zweite Schätzung dieser Kombination ausgehend von den in dem zweiten Zeitmaßstab ausgedrückten seismischen Daten zu bestimmen;

- es wird ein Maßstabsfaktor t1 (t0) definiert, der es gestattet, synthetische Daten, die in einem ersten Zeitmaßstab t0 beschrieben sind, in einem zweiten Zeitmaßstab t1 mittels einer Differentialgleichung auszudrücken, welche durch eine Funktion F die Änderungen der Laufzeit einer seismischen Welle $\dfrac{\partial t_1(t_0)}{\partial t_0}$ mit den Kombinationen von physikalischen Größen verknüpft, und indem der Maßstabsfaktor $t_1(t_0)$ bestimmt wird, indem die Differentialgleichung mittels eines Minimierungsverfahrens gelöst wird, bei welchem der Abstand zwischen

$\dfrac{\partial t_1(t_0)}{\partial t_0}$ und der Funktion $F$ minimiert wird; und

- es wird das für ein heterogenes Medium repräsentative Bild konstruiert, indem die gemeinsame Inversion durchgeführt wird, bei welcher eine Kostenfunktion unter Verwendung des Maßstabsfaktors $t_1(t_0)$ minimiert wird, derart, dass ein Abstand zwischen den synthetischen Daten und den in dem anderen Zeitmaßstab ausgedrückten seismischen Daten berechnet wird.

**2.** Verfahren nach Anspruch 1, wobei die in unterschiedlichen Zeitmaßstäben ausgedrückten Daten Daten sind, die von Emissionen von Wellen in dem Medium stammen.

**3.** Verfahren nach Anspruch 2, wobei die in dem Medium emittierten Wellen elastische oder elektromagnetische Wellen sind.

**4.** Verfahren nach einem der vorhergehenden Ansprüche, wobei die Daten seismische Daten mit mehreren Komponenten vor Summation sind.

**5.** Verfahren nach einem der vorhergehenden Ansprüche, wobei der eine der Zeitmaßstäbe den Zeitmaßstab der Ankunftszeiten der nicht konvertierten P-Wellen (PP) darstellt.

**6.** Verfahren nach einem der vorhergehenden Ansprüche, wobei der eine der Zeitmaßstäbe den Zeitmaßstab der Ankunftszeiten der konvertierten P-Wellen (PS) darstellt.

**7.** Verfahren nach einem der vorhergehenden Ansprüche, wobei der eine der Zeitmaßstäbe den Zeitmaßstab der Ankunftszeiten der nicht konvertierten S-Wellen (SS) darstellt.

**8.** Verfahren nach einem der vorhergehenden Ansprüche, wobei der eine der Zeitmaßstäbe den Zeitmaßstab der Ankunftszeiten der konvertierten S-Wellen (SP) darstellt.

**9.** Verfahren nach einem der vorhergehenden Ansprüche, wobei die Kombination von physikalischen Größen Impedanzen darstellt.

**10.** Verfahren nach Anspruch 9, wobei die Impedanzen auf die S-Wellen bezogene Impedanzen sind.

**11.** Verfahren nach Anspruch 10, wobei die Schätzung der Kombinationen von physikalischen Größen die Verwendung einer Mehrkomponenten-Inversion umfasst.

12. Verfahren nach Anspruch 9, wobei die Impedanzen auf die P-Wellen bezogene Impedanzen sind.

13. Verfahren nach Anspruch 12, wobei die Schätzung der Kombinationen von physikalischen Größen die Verwendung einer Einkomponenten-Inversion umfasst.

14. Verfahren nach den Ansprüchen 11 und 13, wobei die Inversion eine stratigraphische Inversion ist, welche die Verwendung von A-priori-Informationen umfasst, die in situ gemessene Daten enthalten.

**Fig. 1**

**Fig. 2**

**Fig. 3**

**Fig. 4**

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1865340 A
- EP 1253443 A
- EP 1452889 A
- EP 1624321 A
- FR 2800473
- US 6522973 B

**Littérature non-brevet citée dans la description**

- **Johnston, D. H. ; Eastwood, J. E. ; Shyeh, J. J. ; Vauthrin, R. ; Khan, M. ; Stanley, L. R.** Using legacy seismic data in an integrated time-lapse study : Lena Field, Gulf of Mexico. *The Leading Edge,* 2000, vol. 19 (3), 294-302294
- **Martison, Douglas G. ; Hopper, J.R.** Nonlinear seismic trace interpolation. *Geophysics,* 1992, vol. 57 (1), 136-145
- **Agullo, Y. ; Macé, D. ; Labat, K. ; Tonellot, T. ; Bourgeois, A. ; Lavielle, M.** Joint PP and PS stratigraphic inversion for prestack time migrated multi-component data. *74th Annual International Meeting,* 2004, 889-892
- **Gardner, G.H.F. ; Gardner, L.W. ; Gregory, A.R.** Formation velocity and density - The diagnostic basics of stratigraphic traps. *Geophysics,* 1974, vol. 39, 770-780